# EUROPEAN PATENT SPECIFICATION

(11) **EP 2 721 354 B1**
(45) Date of publication and mention of the grant of the patent: **24.12.2014**
(21) Application number: 12713937.6
(22) Date of filing: 30.03.2012
(51) Int. Cl.: F24J 2/52, E04D 13/14

(54) **A ROOF MOUNTING DEVICE**
DACHMONTAGEVORRICHTUNG
DISPOSITIF DE MONTAGE DE TOIT

(30) Priority: 01.06.2011 DK 201170278
(43) Date of publication of application: 23.04.2014
(73) Proprietor: Jual Holding A/S, 7130 Juelsminde (DK)
(72) Inventor: JEPSEN, Henrik, DK-8960 Randers SØ (DK)
(74) Representative: Zacco Denmark A/S
(86) International application number: PCT/EP2012/055835
(87) International publication number: WO 2012/163570

(56) References cited:
- DE-A1-102008 012 717
- US-A- 5 603 187
- US-A1- 2008 121 273
- US-A1- 2010 170 163
- US-B1- 7 861 485

## Description

The present invention relates to a roof mounting device. According to a first aspect, the roof mounting device includes a flashing configured to be integrated into a roof of a building. The flashing inter alia comprise two interconnect able parts; a base member having a protrusion configured to extend through a roof covering material and a top cover configured to receive the protrusion.

The flashing also may comprise a sheet of roof covering material interposed in-between the base member and the top cover. The sheet of roof covering may constitute a sheet of bituminous roof covering.

According to a second aspect, the present invention relates to a method of mounting a roof mounting device.

### Background

In particular, the present invention relates to roof mounting devices of the type configured for retaining various structures, such as solar panels and the like, on or on top of, a building or a structure having a roof provided with a roofing membrane.

Solar panels have become increasingly popular due to, among others; focus on reduction of CO₂ emission and reduction in production and acquisition costs.

Solar panels, both photovoltaic and solar thermal, are often provided as integrated parts of new buildings. The panels are also provided as retrofits on existing buildings. During retrofits, the panels typically are installed on top of existing roofing decks or roof coverings.

Installation of solar panels and other equipment requires a strong foundation on which the equipment can be safely mounted. Such foundations are often obtained by placing or installing new structures, or roof mounting devices, on top of existing roofs. The structures may not corrupt the water tight nature of the roofs and the structures has to be durable, easy to construct and facilitate easy installation.

Relatively light equipment require, due to wind forces, a firm and pull resistant connection to the roof supporting the structure. The connections have to be able to withstand not only gravity-forces resulting from the weight of the structure, but also upwards and sideways forces induced on the equipment, typically by the wind.

Today, such connections are obtained e.g. by securing a mounting device inter alia comprising a base plate, a sheet of a bituminous roof covering such as a bituminous roofing membrane, and means for receiving the object to be fastened, onto the roof.

Typically, the means for receiving the object to be fastened onto the roof protrudes through the sheet of bituminous roof covering or roofing membrane, such that, upon the base being secured to the roof and the sheet of bituminous roof covering being unified with the underlying roof membrane, the base is embedded in the roofs covering material.

In order to obtain roof mounting devices capable of resisting the upwards and sideways forces induced on the structure, one of today's practices is to design the mounting devices including base plate and supporting structures with material thicknesses allowing for sufficient strength such that the components of the device will not deform or fail under load. The downside of increasing material thickness is increased weight as well as increased costs of manufacture and transport etc.

DE 10 2008 012 717 A discloses a roof mounting device comprising a base plate, arranged at a lower end of a support unit, and a fixing geometry part e.g. flange disk, arranged at an upper end of the unit. The unit has upper and lower support segments adjusted relative to each other. The plate is arranged at the lower segment, and the geometry part is arranged at the upper segment. A flange is arranged at an outer circumference of the upper segment. The segments are designed as a threaded sleeve and a threaded spindle. A polyamide disk is arranged between the geometry part and the flange.

### Brief description of the invention

The present invention seeks to set forth an improved roof mounting device having increased strength properties over today's roof mounting devices.

Further, the present invention seeks to set forth an improved roof mounting device configured for quick and easy installation.

Even further, the present invention seeks to set forth a roof mounting device configured mitigate damages to roof coverings as a result of deflection of a part of the roof.

Finally, the present invention seeks to set forth a method of installing structures on top of roofs.

This is achieved by a roof mounting device in accordance with the preamble of the present specification wherein the roof mounting device further include a sleeve configured for connecting with an interior of the protrusion of the base member and a threaded rod configured for connecting with the sleeve.

Hereby an improved roof mounting device that resolves the abovementioned drawbacks are provided.

The connecting rod may comprise means for connecting with an underlying structure of a roof.

The protrusion arranged in said base member may be arranged as an inverted and/or cup shaped protrusion. Further the protrusion may be arranged or oriented such that the protrusion, when the roof mounting device is installed on a roof, extends away from the roof.

The protrusion may be provided in the base member by means of deep drawing or equivalent.

According to one embodiment, the flashing may further include a sheet of roof covering material interposed in-between a portion of the base member and a portion the top cover or cap. The base member and/or the top cover may be provided with protrusions or equivalent configured for obtaining watertight connection between the flashing, i.e. the base member on one side and the top cover or cap on the other side, and the roof covering material.

According to one embodiment, the sleeve may further include engagement means configured for coupling the flashing with the sleeve.

According to one embodiment, the engagement means may constitute threads configured for engaging with an interior of the protrusion.

According to one embodiment, the engagement means may constitute a snap locking ring such as a Seeger ring or equivalent configured for engaging with an interior of the protrusion.

According to one embodiment, the sleeve may define an interior cavity and the sleeve may, in one end, be partially closed and comprise a passage for the threaded rod.

According to one embodiment, the partially closed end may be configured for receiving in a threaded union or a nut.

According to one embodiment, the flashing and the sleeve may be connected to the threaded rod in a way allowing the sleeve and the flashing to be displaced downwardly together, along with the threaded rod, towards a sub adjacent structural roofing member when the roof mounting device is installed on a roof.

According to one embodiment, the threaded rod may be configured for receiving, in a threaded connection, a threaded union or a nut configured for anchoring the sleeve from inside an upwards open cavity of the sleeve. This allows for downwards displacement of the sleeve along a longitudinal axis of the threaded rod when the roof mounting device is installed on a roof.

According to one embodiment, the sleeve may comprise an inner surface or area configured to receive said a nut in a connection configured for conveying rotational motion of the sleeve to the nut whereby the nut and the sleeve may move along threads provided on the threaded rod.

According to one embodiment, the sleeve may include an inner surface configured for accommodating said nut and the inner surface may be configured for preventing the sleeve from moving away from a sub adjacent structural roofing member.

According to one embodiment, the sleeve may have a hexagonal internal cross section. The dimensions of internal cross section may be chosen as to fit loosely with a standardized nut.

According to one embodiment, the sleeve may comprise grooves, faces or holes suitable for engagement with a tool configured for rotating the sleeve.

According to one embodiment, the flashing may be configured for transmittal of loads through the flashing, via the sleeve, and onto the threaded rod whereby loads are conveyed onto a sub adjacent roofing structure.

According to one embodiment, the top cover may comprise means for receiving equipment such as a solar collector.

According to the second aspect of the present invention, a method of mounting a roof mounting device, wherein the roof mounting device is to be anchored to a sub adjacent structural roofing element is provided. The method includes the steps of:
1) fixating a threaded rod into or onto a sub adjacent structural roofing member;
2) placing a sleeve onto, or around, the threaded rod;
3) adjusting the position of the sleeve with respect to the threaded rod by turning the sleeve;
4) connecting a flashing, which may or may not include a base member, to the sleeve;

According to one embodiment of the second aspect, the method may further include the steps of, in-between the steps 2) and 3):
- placing a threaded union or nut in threaded connection with threaded rod;
- placing the sleeve around the union or nut by lifting the sleeve;

According to one embodiment of the second aspect, the method further may include the steps of:
- placing a sheet of roof covering material onto the flashing such that a protrusion of the base member protrudes through the roof covering material;
- installing a top cover onto the protrusion.

According to an embodiment of the second aspect of the present invention, the method may comprise the steps of: fixating an elongated support into or onto a sub adjacent structural roofing member; mounting a sleeve onto said elongated support; adjusting the position of said sleeve, by turning or manipulating the sleeve along an axis defined by the support or threaded rod; connecting a base member and a coupling portion to said sleeve by corresponding locking means; placing a roof covering membrane around a protrusion of said base member; mounting a top cover.

According to one embodiment, the method further comprises the step of: mounting a nut onto said elongated support after the mounting of said sleeve; adjusting the position of said nut, by turning or manipulating said sleeve along an axis defined by the extent of said elongated support.

According to a further aspect of the present invention, a roof mounting device comprising a flashing configured to be fastened onto a roofing structure is provided. The roof mounting device further comprise an elongated support member configured for rigid fixation into or onto a sub adjacent structural roofing member, wherein the support member further is configured for transmittal of loads through the flashing such that the flashing does not act as a structural load bearing member.

### Brief description of the figures

Figure 1 illustrates an exploded perspective and sectional view of a part of a roof mounting device according to an embodiment of the present invention.
Figure 2 illustrates an exploded perspective and sectional view of a part of a roof mounting device according to an embodiment of the present invention.
Figure 3 illustrates a cut away sectional view of a part of a roof mounting device according to an embodiment of the present invention.
Figure 4 illustrates a sectional view through a part of a roof mounting device according to an embodiment of the present invention.
Figure 5 illustrates a sectional view through a part of a roof mounting device according to an embodiment of the present invention.
Figure 6 illustrates a sectional view through a part of a roof mounting device according to an embodiment of the present invention.
Figure 7 illustrates a sectional perspective view through a part of a roof mounting device according to an embodiment of the present invention.
Figure 8 illustrates a sectional view through a part of a roof mounting device according to an embodiment of the present invention.
Figure 9 illustrates an exploded perspective and sectional view of a part of a roof mounting device according to an embodiment of the present invention.
Figure 10 illustrates a sectional view of a flashing in perspective.
Figure 11 illustrates a sectional view of a flashing.
Figure 12 illustrates an exploded perspective and sectional view of a part of a roof mounting device according to an embodiment of the present invention.
Figure 13 illustrates a perspective and sectional view of a part of a roof mounting device according to an embodiment of the present invention.
Figure 14 illustrates a sectional view through a part of a roof mounting device according to an embodiment of the present invention.
Figure 15 illustrates two views of a perspective and sectional view through a roof mounting device according to an embodiment of the present invention.
Figure 16 illustrates two views of a perspective and sectional view through a roof mounting device according to an embodiment of the present invention.

### Detailed description with reference to the figures,

With reference to the drawings, the invention will in the below be described in detail.

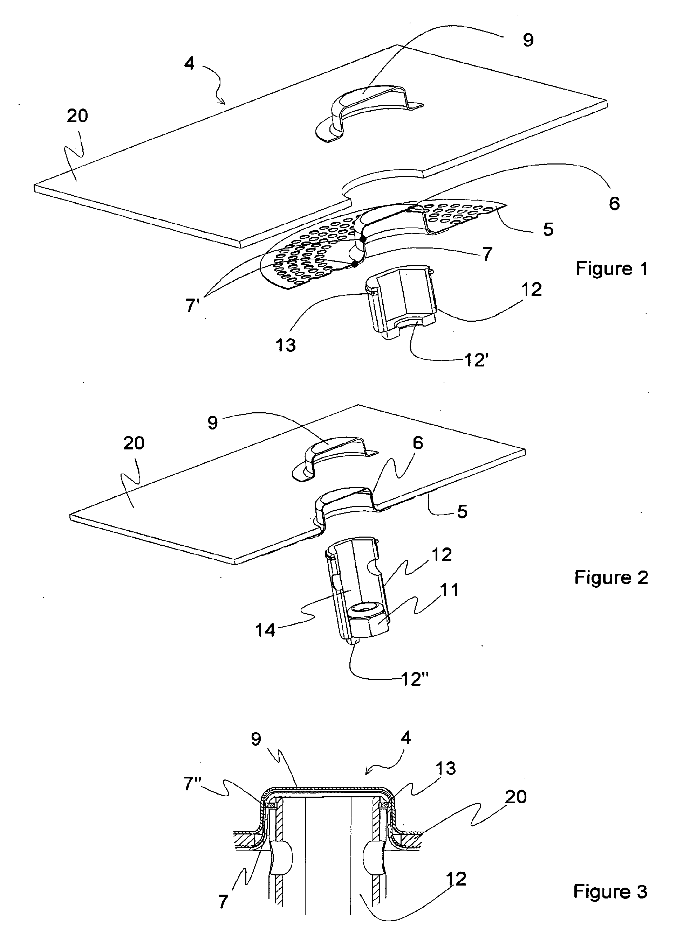

A roof mounting device according to an embodiment of the invention may include three main components; a flashing 4, or base structure, and a sleeve 12, as illustrated in the exploded view according to figure 1, and means configured for connecting the sleeve 12 to an underlying roofing structure. Such means may constitute a threaded rod 10 or equivalent.

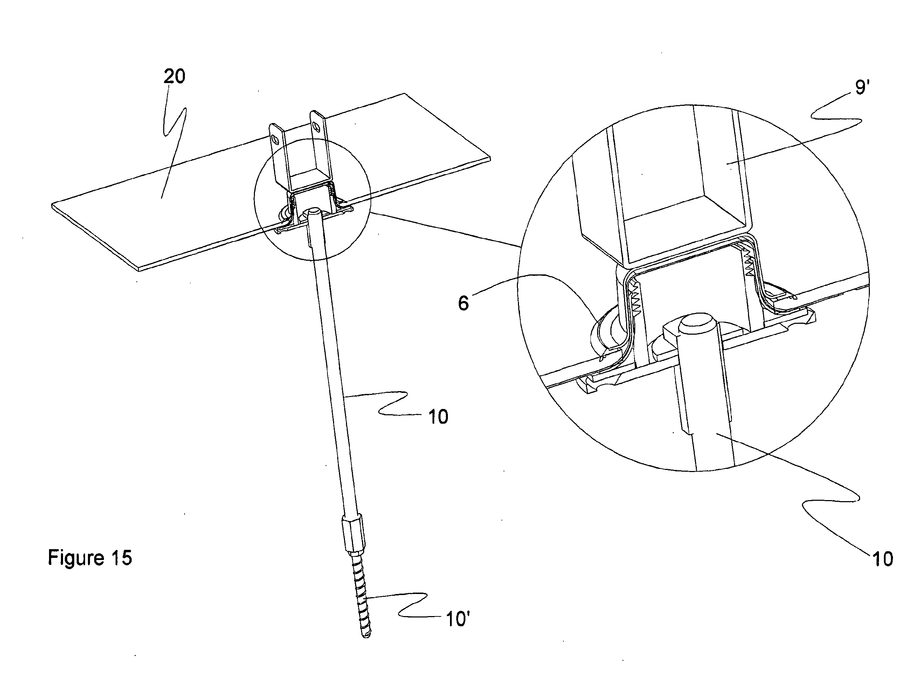

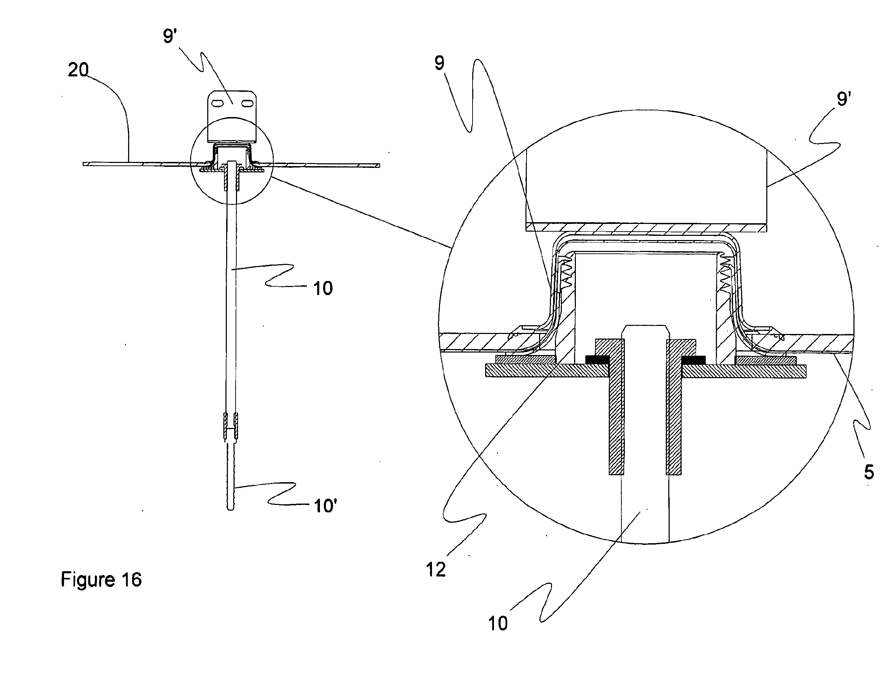

The threaded rod 10 may in one end be provided with threads configured for engaging with threads 12' provided on the sleeve 12 or threads provided on a nut 11 or a threaded union. The threaded rod 10 may further, opposite the said mentioned threads, be provided with means 10' configured for connection with an underlying roofing structure. The means 10' may or may not be integrated with the threaded rod 10, see figures 15 and 16 which disclose embodiments of the roof mounting device in its entirety.

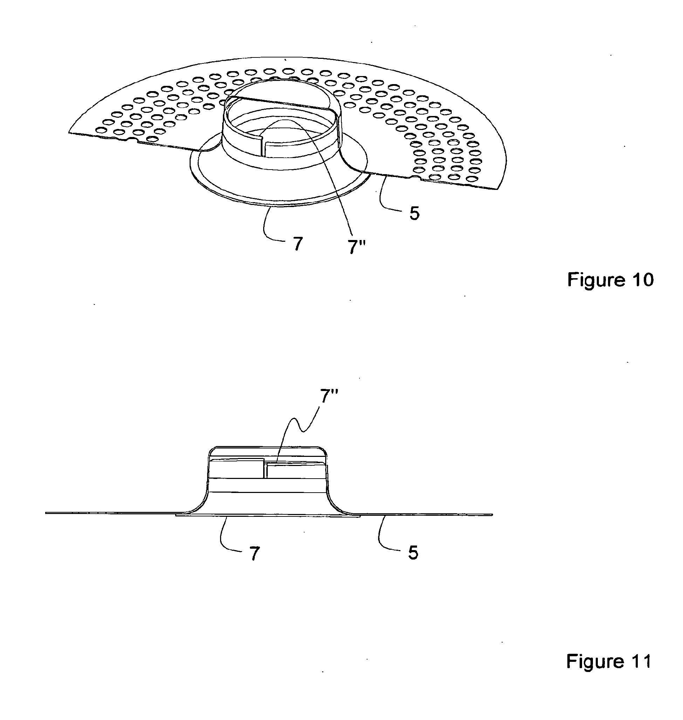

The base member is illustrated singly in figures 10 and 11.

The flashing 4 according to the embodiment as shown in figure 1 includes a base member 5 having a protrusion 6, which may be circular, and a vaguely visible coupling portion 7 configured to be rigidly connected, e.g. by welding, riveting or gluing, to the base member 5, welding zones are indicated by 7'.

A roofing membrane 20 may be disposed between a top cover 9, or cap, and the base member 5, when the flashing 4 is assembled. The roofing membrane 20 may, in order to facilitate waterproof integration, be unified with a roofing membrane of a not shown surrounding roof of a building and the like.

The roofing membrane 20 may constitute a bituminous roofing membrane.

The sleeve 12 may be provided as an open ended and hollow component defining a passageway for an elongated threaded rod 10. The sleeve 12 may be provided with threads 12' configured for engagement with corresponding threads provided on the threaded rod 10.

During installation of the roof mounting device according to the embodiment as shown in figure 1, the threaded rod 10 is, as a first step, rigidly fixated onto or into an underlying roofing structure and the sleeve 12 is, by means of threads 12', then screwed down on the threaded rod 10 until the sleeve 12 reaches a suitable height with respect to the not shown surrounding roof.

The base part 5 is then applied onto the sleeve 12 by leading an upper portion of the sleeve 12 into a protrusion 6 provided on the base part 5.

The configuration according to the embodiment as shown in figure 1 will maintain the flashing 4, and thereby also any attached roof covering and attached equipment etc. fixed with respect to the underlying roofing structure.

The embodiment according to figure 1 is suitable for installation on stable roofs, such as concrete roofs, which cannot substantially move or give in e.g. as a result of temperature changes or mechanically induced loads.

Figure 2 illustrates another embodiment of the present invention. This embodiment is particular advantageous if the site of application constitute a flexible rooftop e.g. of the type where roof covering material is applied onto insulation material whereby the roof or roof covering will give in or deflect in case a craftsman is walking on the roof or the roof is burdened by snow etc.

The embodiment according to figure 2 differs from the embodiment according to figure 1 in that the sleeve 12 is not provided with threads for engagement with the threaded rod 10 and in that the sleeve 12 will allow the threaded rod 10 to move inside the sleeve 12 along an axis of the threaded rod 10. As can be seen in figure 2, the sleeve 12 accommodates a nut 11 which rests on a shoulder 12" arranged at the end of the sleeve 12. The shoulder 12" prevents the nut 11 from moving past or over the end of the sleeve 12.

The interior dimensions of the sleeve 12, and the outer dimensions of the nut 11 is chosen as to allow the nut 11 to move inside the sleeve 12 along a longitudinal axis of the threaded rod 10 whereby the sleeve 12 incl. flashing and any attached equipment is allowed to follow the roof covering material downwards in case a flexible underlying roof for some reason give in. If the sleeve was configured not to slide downwards along the threaded rod, the surrounding roof covering material potentially would suffer damage as the roof covering material is maintained in a static position with respect to the threaded rod 10 and the underlying roof support.

Figure 3 is a partial and sectional view through a part of the roof mounting according to one embodiment of the present invention. As can be seen, the parts, i.e. the flashing 4 and the sleeve 12, may be coupled together by locking means 13.

The locking means 13 may, in one embodiment, constitute a Seeger ring or equivalent configured for engagement, or internal engagement, with a groove arranged or provided on an outside surface of the sleeve 12.

The Seeger ring 13 or equivalent may further be configured to, on an outside surface of the ring or equivalent, correspond or connect with a space or area inter alia defined by the protrusion 6 of the base member 5 and the coupling portion 7 defining an internal step 7" or change of diameter within the protrusion 6. The step 7" may be annular.

The dimensions of the components are be chosen such that upon pressing the sleeve 12 into the hollow defined the protrusion 6 of the base member 5, the Seeger ring 13 or equivalent may engage with the space above the coupling portion 7, and thereby coupling the sleeve 12 and the flashing 4 together.

As can be seen in the figures, the flashing 4 may include a base member 5 and a coupling portion 7. The two parts may be fixed together by means of welding, gluing, pressure processes or equivalent. Welding zones is indicated by numeral 7' in figure 1.

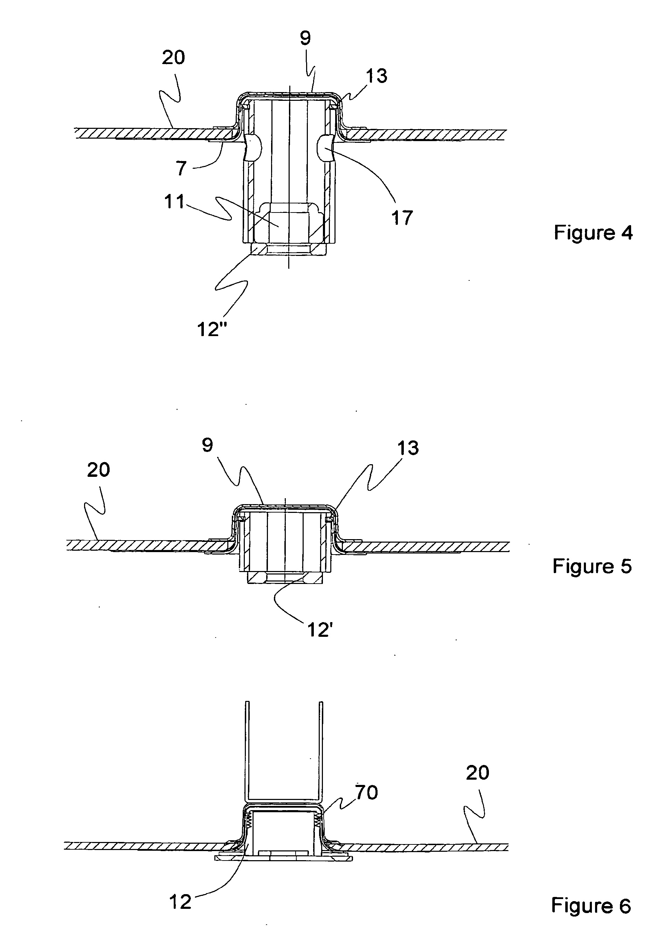

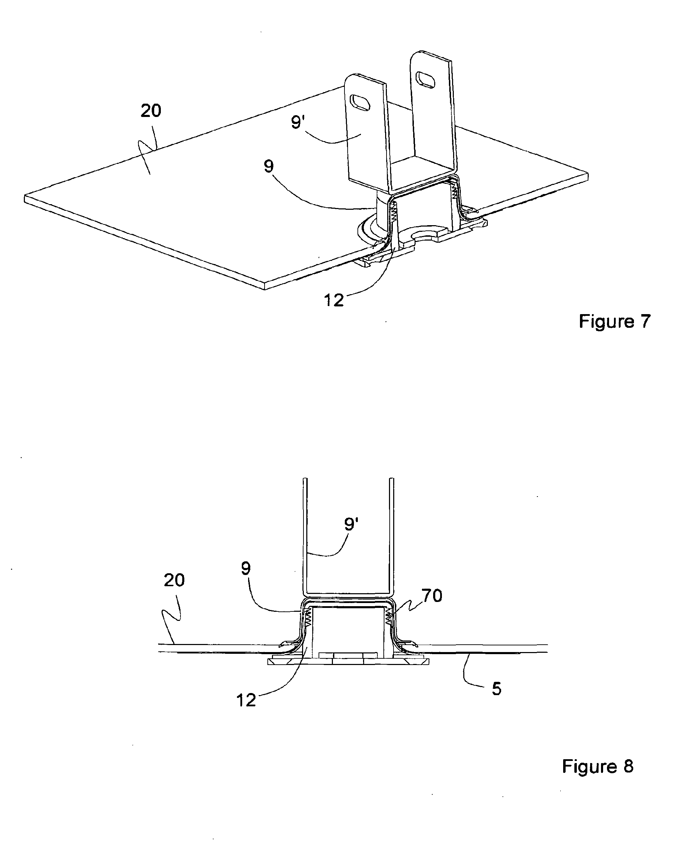

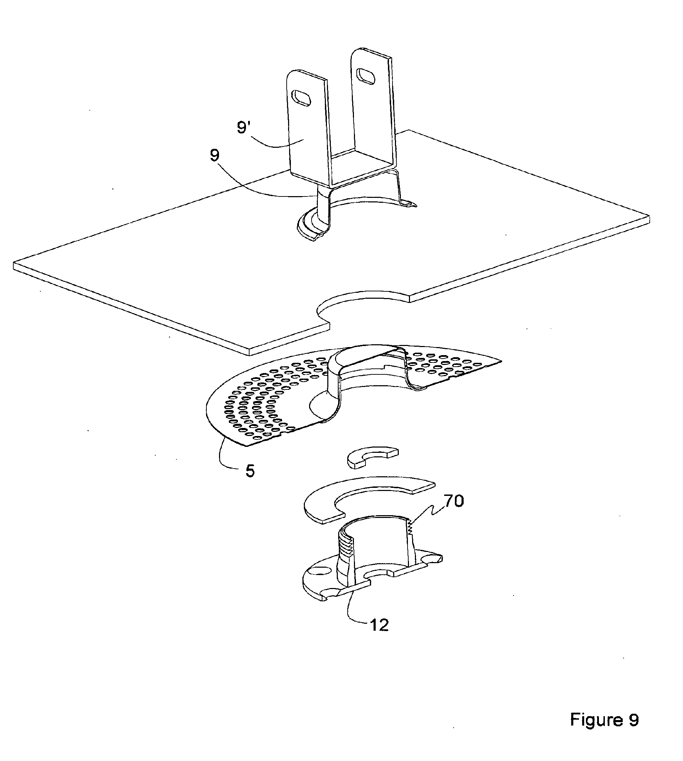

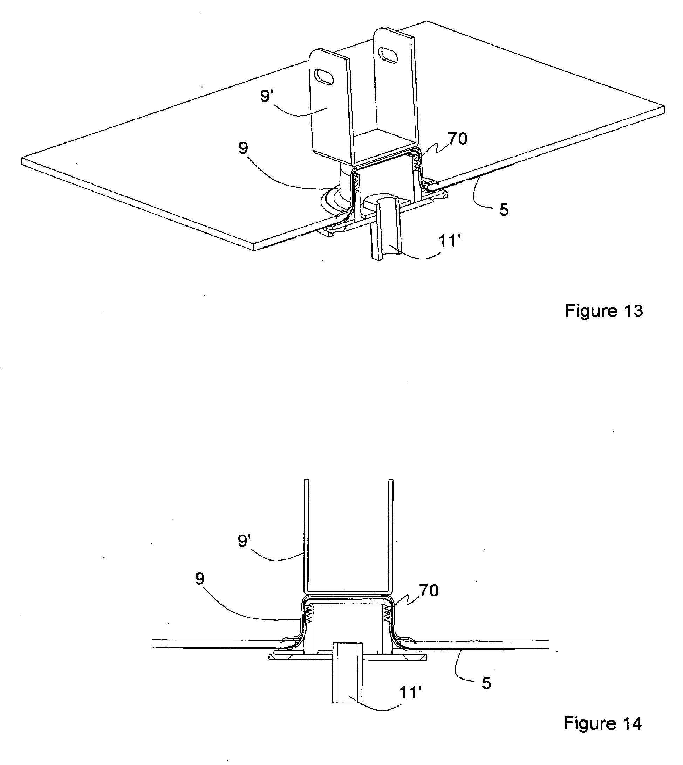

As can be seen in figures 6 - 9 and figures 12 - 16, the flashing 4 may as an alternative be coupled to the sleeve 12 by means of threads 70 provided on an upper an outer surface of the sleeve 12. The threads 70 may or may not be provided as conical threads.

In embodiments wherein the sleeve 12 is connected to the flashing 4 by threads 70, the coupling portion 7 may be embodied as a thread engaging member having an upper edge 7" configured for engagement with the threads 70.

The roof covering membrane 20 may, prior to onsite installation, be integrated in the flashing, between the base member 5 and the top cover 9 or cap, whereby a pre-assembled unit configured to couple to the sleeve 12 is obtained.

As can be seen in the figures, an essentially vertical threaded rod 10 may be rigidly fastened to a sub adjacent structural roofing member, such as a trapeze roof structure, concrete or wooden deck. The threaded rod 10 may be embedded in the concrete deck so that the threaded end of the rod project upwards from the top surface of the concrete deck. Insulation, such as rigid insulation, may be laid on the roof in a well-known manner in order to obtain a stable underlay or foundation for the flashing 4. A hole or passage may be provided in the insulation in order to accommodate the threaded rod 10, the sleeve 12 and a nut 11.

The rigid insulation may, after installation of the rod 10 and the sleeve 12, be covered with one or more layers of roof covering material such as bituminous roof covering material, or similar layers of protective facing material.

If the roof mounting device is not provided as a pre-assembled unit, a sheet of roof covering material 20 is arranged around the circular protrusion 6 of the base member 5, and finally the top cover 9, or cap, is mounted and fastened by a suitable fastening technique.

As shown in figures 6, 7, 9, 12, 13 and 14, the top cover 9, or cap, may comprise connecting means 9', such as a coupling element, bracket or equivalent, for receiving a structure such as a solar panel or other equipment to be mounted above a not shown sub adjacent structural roofing member.

Typically and as already briefly discussed above, roof covering materials and structures tend to give in to loads such as when a craftsman is walking on the roof. This may be further increased when a relatively thick layer of insulation is applied underneath the roof mounting device. Under certain embodiments, the configuration of the sleeve 12 serve to mitigate damage to the waterproof joints encircling the roof mounting device, as the sleeve 12 is able to slide down along an axis defined by the extent of treaded rod 10, and still acts as an anchoring e.g. for a solar panel.

The sleeve 12 may be cup shaped or may, in certain embodiments, have a hexagonal inner cross section configured for receiving a nut 11 in a loose connection such that the nut relatively effortless may slide within the cup shaped interior of the sleeve 12. This configuration is particular advantageous as the sleeve may be displaced along a longitudinal axis downward towards the sub adjacent structural roofing member. As already mentioned, this configuration allows the surrounding roofing structure to move without compromising the integrity of the surrounding roofing structure and its watertight connection with the roof mounting device.

As can be seen in the figures, the sleeve 12 may be provided with apertures or through holes 17 oriented essentially perpendicular to a longitudinal axis of the sleeve 12. The holes 17 are configured for receiving an elongated object or tool facilitating turning of the sleeve 12 in order to displace the sleeve along its threaded connection with the rod 10.

The outer surface of the sleeve 12 may also, possible in combination with the holes 17 or not, be provided with planar surfaces suitable for engagement with a tool. The planar surfaces may be configured for engagement with a tool facilitating turning of the sleeve in order to displace the sleeve 12 along its threaded connection with the rod 10.

The threaded connection between the rod 10 and the nut 11 allow displacement of the sleeve 12 by rotating the sleeve. The connection is such that the sleeve may be rotated after coupling with the flashing 4 in order to adjust or alter the position of the flashing with respect to the underlying roofing structure.

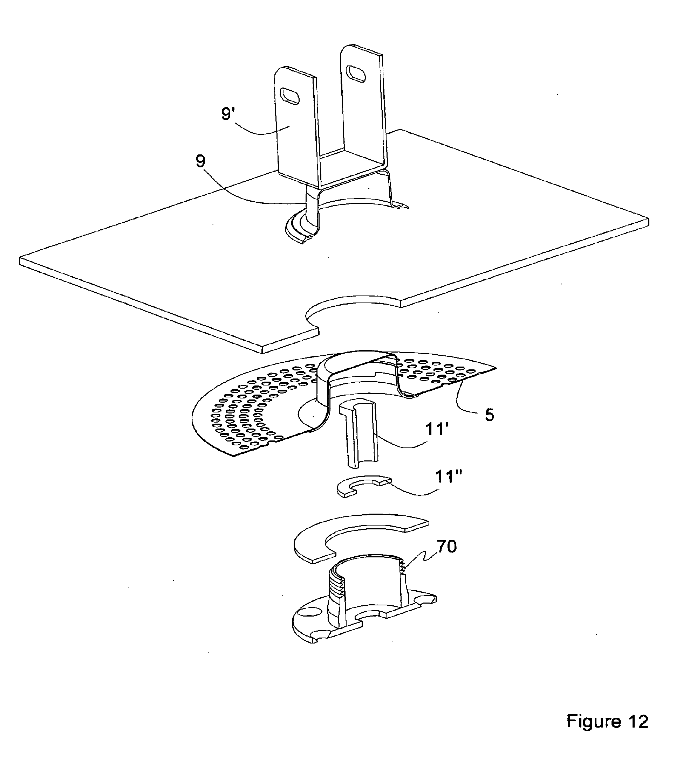

As can be seen in e.g. in figures 12 -16, the nut 11 as shown in some of the preceding figures, may constitute a threaded union 11' which may or may not be configured to rest within the sleeve 12 on a washer 11".

The nut 11 or threaded union 11' may be configured for engagement with a not shown tool through the upwards opening in the sleeve 12. This allows for easy setting of the desired height of the sleeve 12 with respect to the surrounding roof. The nut 11 and/or the threaded union 11', or threaded bush, consequently may be furnished with means configured for receiving the tool. The threaded union 11' may, as shown e.g. in figure 15, be configured to extend partially through the hole or through hole in the sleeve 12, and in such configurations, the union 11' may be provided with tappet or equivalent configured for preventing the union 11' from leaving the interior of the sleeve 12.

The invention is not intended to be limited to the embodiments presented as examples above. The invention is however intended to be applied widely and inter alia within the scope of the invention idea as defined in the appended claims.

The use of the expression "coupled" implies that the elements may be directly connected together or may be coupled through one or more intervening elements.

The application and combination of features and solutions presented by the present invention are not limited to the presented embodiments. One or more features of one embodiment can and may be combined with one or more features of other embodiments, whereby not described but valid, embodiments of the present invention may be obtained.

The terms "including/comprises/comprising/comprised of' when used in this specification incl. claims is taken to specify the presence of stated features, integers, steps or components but does not preclude the presence or addition of one or more other features, integers, steps, components or groups thereof.

## Claims

1. A roof mounting device including:
• a flashing (4) configured to be integrated into a roof of a building; said flashing (4) inter alia comprising two interconnectable parts; a base member (5) having a protrusion (6) configured to extend through a roof covering material (20) and a top cover (9) configured to receive said protrusion (6)
**characterized in that** said roof mounting device further includes:
• a sleeve (12) configured for connecting with an interior of said protrusion (6) of said base member (5), and
• a threaded rod (10) configured for connecting with said sleeve (12).

2. A roof mounting device according to claim 1, wherein said flashing (4) further include a sheet of roof covering material interposed in-between a portion of said base member (5) and a portion said top cover (9).

3. A roof mounting device according to any one or more of the foregoing claims, wherein said sleeve (12) further includes engagement means (13, 70) configured for coupling said flashing (4) with said sleeve (12).

4. A roof mounting device according to claim 3, wherein said engagement means constitutes threads (70) configured for engaging with an interior of said protrusion (6).

5. A roof mounting device according to claim 3, wherein said engagement means constitute a snap locking ring such as a Seeger ring (13) or equivalent configured for engaging with an interior of said protrusion (6).

6. A roof mounting device according to any one or more of the foregoing claims, wherein said sleeve (12) defines an interior cavity and wherein said sleeve (12) in one end is partially closed and comprise a passage for said threaded rod (10).

7. A roof mounting device according to claim 6, wherein said partially closed end is configured for receiving in a threaded union or a nut (11).

8. A roof mounting device according to any one or more of the foregoing claims, wherein said flashing (4) and said sleeve (12) is connected to said threaded rod (10) in a way allowing said sleeve (12) and said flashing (4) to be displaced downwardly together, along with said threaded rod (10), towards a sub adjacent structural roofing member when said roof mounting device is installed on a roof.

9. A roof mounting device according to claim 8, wherein said threaded rod (10) is configured for receiving, in a threaded connection, a threaded union (11') or a nut (11) configured for anchoring said sleeve (12) from inside an upwards open cavity of said sleeve (12) allowing for downwards displacement of said sleeve (12) along a longitudinal axis of said threaded rod (10) when said roof mounting device is installed on a roof.

10. A roof mounting device according to any one or more of the foregoing claims, wherein said sleeve (12) comprise an inner surface or area configured to receive said a nut (11) in a connection configured for conveying rotational motion of said sleeve (12) to said nut (11) whereby said nut (11) and said sleeve (12) moves along threads provided on said threaded rod (10).

11. A roof mounting device according to any one or more of the foregoing claims, wherein said sleeve (12) include inner surface configured for accommodating said nut (11) and wherein said inner surface is configured for preventing said sleeve (12) from moving away from a sub adjacent structural roofing member.

12. A roof mounting device according to any one or more of the foregoing claims, wherein said sleeve (12) has a hexagonal internal cross section.

13. A roof mounting device according to any one or more of the foregoing claims, wherein said sleeve (12) comprise grooves, faces or holes (17) suitable for engagement with a tool configured for rotating said sleeve (12).

14. A roof mounting device according to any one or more of the foregoing claims, wherein said flashing (4) is configured for transmittal of loads through said flashing (4) via said sleeve (12) and onto said threaded rod (10) whereby loads are conveyed onto a sub adjacent roofing structure.

15. A roof mounting device according to any one or more of the foregoing claims, wherein said top cover (9) comprise means (9') for receiving equipment such as a solar collector.

16. A method of mounting a roof mounting device according to claim 1, wherein said roof mounting device is to be anchored to a sub adjacent structural roofing element, said method includes the steps of:
1) fixating an threaded rod (10) into or onto a sub adjacent structural roofing member;
2) placing a sleeve (12) onto said threaded rod (10);
3) adjusting the position of said sleeve (10) with respect to said threaded rod (10) by turning said sleeve (12);
4) connecting a flashing (4) comprising a base member (5) to said sleeve (12);

17. A method according to claim 16, wherein said method further includes the steps of, in-between the steps 2) and 3):
• placing a threaded union (11') or nut (11) in threaded connection with said threaded rod (10);
• placing said sleeve (12) around said union or nut (11) by lifting said sleeve (12);

18. A method according to claim 16 or 17, wherein said method further includes the steps of:
• placing a sheet of roof covering material onto said flashing such that a protrusion (6) of said base member (5) protrudes through said roof covering material;
• installing a top cover (9) onto said protrusion (6).

## Patentansprüche

1. Dachmontagevorrichtung umfassend:
• ein Abdeckblech (4) für das Integrieren in ein Dach oder ein Gebäude; welches Abdeckblech (4) unter anderem zwei miteinander verbindbare Teile umfasst; ein Basiselement (5) mit einem Vorsprung (6), welcher dazu ausgebildet ist, sich durch ein Dachdeckungsmaterial (20) hindurch zu erstrecken, und einen Deckel (9), welcher zur Aufnahme des Vorsprungs (6) ausgebildet ist.
**dadurch gekennzeichnet, dass** die Dachmontagevorrichtung ferner umfasst:
• eine Hülse (12) zum Verbinden mit einem Inneren des Vorsprungs (6) des Basiselements (5), und
• eine Gewindestange (10) zum Verbinden mit der Hülse (12).

2. Dachmontagevorrichtung nach Anspruch 1, wobei das Abdeckblech (4) ferner ein Blatt aus Dachdeckungsmaterial umfasst, welches zwischen einem Abschnitt des Basiselements (5) und einem Abschnitt des Deckels (9) eingeschoben ist.

3. Dachmontagevorrichtung nach einem oder mehreren der vorgehenden Ansprüche, wobei die Hülse (12) ferner Eingriffsmittel (13, 70) zum Verbinden des Abdeckblechs (4) mit der Hülse (12) umfasst.

4. Dachmontagevorrichtung nach Anspruch 3, wobei die Eingriffsmittel Gewinde darstellen (70), welche zum Eingriff mit einem Inneren des Vorsprungs (6) ausgebildet sind.

5. Dachmontagevorrichtung nach Anspruch 3, wobei die Eingriffsmittel einen Schnappverriegelungsring darstellen, wie beispielsweise einen Seegerring (13) oder dergleichen, welcher zum Eingriff mit einem Inneren des Vorsprungs (6) ausgebildet ist.

6. Dachmontagevorrichtung nach einem oder mehreren der vorgehenden Ansprüche, wobei die Hülse (12) eine innere Aussparung definiert, und wobei die Hülse (12) an einem Ende teilweise geschlossen ist und einen Durchgang für die Gewindestange (10) umfasst.

7. Dachmontagevorrichtung nach Anspruch 6, wobei das teilweise geschlossene Ende zur Aufnahme in einer Gewindeeinheit oder einer Nut (11) ausgebildet ist.

8. Dachmontagevorrichtung nach einem oder mehreren der vorgehenden Ansprüche, wobei das Abdeckblech (4) und die Hülse (12) mit der Gewindestange (10) in einer solchen Weise verbunden sind, dass die Hülse (12) und das Abdeckblech (4) gemeinsam nach unten versetzt werden können, zusammen mit der Gewindestange (10) in Richtung eines unten liegenden Dachstrukturelements, wenn die Dachmontagevorrichtung an einem Dach montiert ist.

9. Dachmontagevorrichtung nach Anspruch 8, wobei die Gewindestange (10) zur Aufnahme einer Gewindeeinheit (11') oder einer Nut (11) in einer Gewindeverbindung ausgebildet ist, welche Gewindeeinheit oder Nut zur Verankerung der Hülse (12) von dem Inneren einer nach oben offenen Aussparung der Hülse (12) ausgebildet ist, wodurch ein Versetzen der Hülse (12) nach unten entlang einer Längsachse der Gewindestange (10) ermöglicht wird, wenn die Dachmontagevorrichtung an einem Dach montiert ist.

10. Dachmontagevorrichtung nach einem oder mehreren der vorgehenden Ansprüche, wobei die Hülse (12) eine Innenfläche oder einen Bereich zur Aufnahme der Nut (11) in einer Verbindung umfasst, die zur Übertragung der Drehbewegung der Hülse (12) auf die Nut (11) ausgebildet ist, wobei sich die Nut (11) und die Hülse (12) entlang von an der Gewindestange (10) vorgesehenen Gewinden bewegen.

11. Dachmontagevorrichtung nach einem oder mehreren der vorgehenden Ansprüche, wobei die Hülse (12) eine Innenfläche zur Aufnahme der Nut (11) umfasst, und wobei die Innenfläche dazu ausgebildet ist, die Hülse (12) daran zu hindern, sich von einem unten liegenden Dachstrukturelement weg zu bewegen.

12. Dachmontagevorrichtung nach einem oder mehreren der vorgehenden Ansprüche, wobei die Hülse (12) einen sechseckigen Innenquerschnitt aufweist.

13. Dachmontagevorrichtung nach einem oder mehreren der vorgehenden Ansprüche, wobei die Hülse (12) Rillen, Flanken oder Löcher (17) umfasst, die für das Eingreifen mit einem Werkzeug, das für das Drehen der Hülse (12) ausgebildet ist, geeignet ist.

14. Dachmontagevorrichtung nach einem oder mehreren der vorgehenden Ansprüche, wobei das Abdeckblech (4) für die Übertragung von Lasten dudrch das Abdeckblech (4) über die Hülse (12) auf das Gewindestange (10) ausgebildet ist, wodurch Lasten auf eine unten liegende Dachstruktur übertragen werden.

15. Dachmontagevorrichtung nach einem oder mehreren der vorgehenden Ansprüche, wobei der Deckel (9) Mittel (9') zur Aufnahme von Ausrüstung, wie beispielsweise einem Solarkollektor, umfasst.

16. Verfahren zum Montieren einer Dachmontagevorrichtung nach Anspruch 1, wobei die Dachmontagevorrichtung an einem unten liegenden Dachstrukturelement zu verankern ist, welches Verfahren die folgenden Schritte umfasst:
1) Fixieren einer Gewindestange (10) in oder auf ein unten liegendes Dachstrukturelement;
2) Platzieren einer Hülse (12) auf der Gewindestange (10);
3) Justieren der Position der Hülse (10) bezüglich der Gewindestange (10) durch Drehen der Hülse (12);
4) Verbinden eines Abdeckblechs (4) umfassend ein Basiselement (5) mit der Hülse (12).

17. Verfahren nach Anspruch 16, wobei das Verfahren ferner die folgenden Schritte zwischen den Schritten 2) und 3) umfasst:
• Platzieren einer Gewindeeinheit (11') oder Nut (11) in einer mit der Gewindestange (10) bestehenden Gewindeverbindung;
• Platzieren der Hülse (12) um die Einheit oder Nut (11) herum durch Anheben der Hülse (12).

18. Verfahren nach nach Anspruch 16 oder 17, wobei das Verfahren ferner die folgenden Schritte umfasst:
• Platzieren eines Blatts aus Dachdeckungsmaterial auf dem Abdeckblech derart, dass ein Vorsprung (6) des Basiselements (5) durch das Dachdeckungsmaterial hindurch vorspringt;
• Installieren eines Deckels (9) auf den Vorsprung (6).

## Revendications

1. Dispositif de montage de toit, comprenant:
• un recouvrement (4) configuré pour être intégré dans un toit d'un bâtiment; ledit recouvrement (4) comprenant en outre deux parties qui peuvent être reliées l'une à l'autre; un élément de base (5) ayant une saillie (6) configurée pour s'étendre à travers un matériau de couverture de toit (20) et un couvercle supérieur (9) configuré pour recevoir ladite saillie (6),
**caractérisé en ce que** le dispositif de montage de toit en outre comprend:
• un manchon (12) configuré pour la liaison à l'intérieur de ladite saillie (6) dudit élément de base (5), et
• une tige filetée (10) configurée pour la liaison avec ledit manchon (12).

2. Dispositif de montage de toit selon la revendication 1, dans lequel ledit recouvrement (4) comprend en outre une feuille d'un matériau de couverture de toit interposé entre une partie dudit élément de base (5) et une partie dudit couvercle supérieur (9).

3. Dispositif de montage de toit selon l'une quelconque des revendications précédentes, dans lequel ledit manchon (12) en outre comprend des moyens d'engrenage (13, 70) configurés pour accoupler ledit recouvrement (4) avec ledit manchon (12).

4. Dispositif de montage de toit selon la revendication 3, dans lequel lesdits moyens d'engrenage constituent des filets (70) configurés pour venir en prise avec l'intérieur de ladite saillie (6).

5. Dispositif de montage de toit selon la revendication 3, dans lequel lesdits moyens d'engrenage constituent une bague à fermeture encliquetée, tel qu'un anneau de retenue type Seeger (13) ou équivalent, configurée pour s'engager avec une partie intérieure de ladite saillie (6).

6. Dispositif de montage de toit selon l'une quelconque des revendications précédentes, dans lequel ledit manchon (12) définit une cavité intérieure, et dans lequel ledit manchon (12) dans l'une extrémité est partiellement fermée et comprend un passage pour ladite tige filetée (10).

7. Dispositif de montage de toit selon la revendication 6, dans lequel ladite extrémité partiellement fermée est configurée pour la réception dans un raccord fileté ou un écrou (11).

8. Dispositif de montage de toit selon l'une quelconque des revendications précédentes, dans lequel ledit recouvrement (4) et ledit manchon (12) sont reliés à ladite tige filetée (10) de manière à permettre audit manchon (12) et audit recouvrement (4) d'être déplacés conjointement vers le bas, avec ladite tige filetée (10), vers un élément structurel de toiture sous-adjacent lorsque ledit dispositif de montage de toit est installé sur un toit.

9. Dispositif de montage de toit selon la revendication 8, dans lequel ladite tige filetée (10) est configurée pour la réception, dans une liaison filetée, d'un raccord fileté (11') ou d'un écrou (11) configuré pour ancrer ledit manchon (12) à partir de l'intérieur d'une cavité ouverte vers le haut dudit manchon (12) pour permettre le déplacement dudit manchon (12) vers le bas le long d'un axe longitudinal de ladite tige filetée (10) lorsque ledit dispositif de montage de toit est installé sur un toit.

10. Dispositif de montage de toit selon l'une quelconque des revendications précédentes, dans lequel ledit manchon (12) comprend une surface intérieure ou une zone configurée pour recevoir ledit un écrou (11) dans une liaison configurée pour transmettre un mouvement de rotation dudit manchon (12) audit écrou (11), ledit écrou (11) et ledit manchon (12) se déplaçant le long de filetages prévus sur ladite tige filetée (10).

11. Dispositif de montage de toit selon l'une quelconque des revendications précédentes, dans lequel ledit manchon (12) comprend une surface intérieure configurée pour loger ledit écrou (11), et dans lequel ladite surface intérieure est configurée pour empêcher ledit manchon (12) de s'éloigner d'un élément structurel de toiture sous-adjacent.

12. Dispositif de montage de toit selon l'une quelconque des revendications précédentes, dans lequel ledit manchon (12) présente une section transversale intérieure hexagonale.

13. Dispositif de montage de toit selon l'une quelconque des revendications précédentes, dans lequel ledit manchon (12) comprend des rainures, des faces ou des trous (17) appropriés pour venir en prise avec un outil configuré pour faire tourner ledit manchon (12).

14. Dispositif de montage de toit selon l'une quelconque des revendications précédentes, dans lequel ledit recouvrement (4) est configuré pour la transmission de charges à travers ledit recouvrement (4) par l'intermédiaire dudit manchon (12) et vers ladite tige filetée (10), des charges étant transportées sur une structure de toiture sous-adjacente.

15. Dispositif de montage de toit selon l'une quelconque des revendications précédentes, dans lequel ledit couvercle supérieur (9) comprend des moyens (9') pour recevoir de l'équipement, tel qu'un collecteur solaire.

16. Procédé de montage d'un dispositif de montage de toit selon la revendication 1, dans lequel ledit dispositif de montage de toit doit être ancré à un élément structurel de toiture sous-adjacent, ledit procédé comprenant les étapes consistant à:
1) la fixation d'une tige filetée (10) dans ou sur un élément structurel de toiture sous-adjacent;
2) le positionnement d'un manchon (12) sur ladite tige filetée (10);
3) le réglage de la position dudit manchon (10) par rapport à ladite tige filetée (10) en faisant tourner ledit manchon (12);
4) la liaison d'un raccordement (4) comprenant un élément de base (5) audit manchon (12).

17. Procédé selon la revendication 16, dans lequel ledit procédé en outre comprend les étapes consistant à, en général entre les deux étapes 2) et 3):
• le positionnement d'un raccord fileté (11') ou d'un écrou (11) en liaison par filetage avec ladite tige filetée (10);
• le positionnement dudit manchon (12) autour dudit raccord ou d'un écrou (11) en soulevant ledit manchon (12);

18. Procédé selon la revendication 16 ou 17, dans lequel ledit procédé en outre comprend les étapes consistant à:
• le positionnement d'une feuille de matériau de couverture de toit sur ledit recouvrement si bien qu'une saillie (6) dudit élément de base (5) fait saillie à travers ledit matériau de couverture de toit;
• l'installation d'un couvercle supérieur (9) sur ladite saillie (6).
